# EUROPÄISCHE PATENTANMELDUNG

(11) **EP 4 269 166 A1**
(43) Veröffentlichungstag der Anmeldung: **01.11.2023**
(21) Anmeldenummer: 23163796.8
(22) Anmeldetag: 23.03.2023
(51) Int. Cl.: B60L 53/35, B60L 53/36, B60L 53/66, B60L 53/14, G01S 5/00

(54) **KRAFTFAHRZEUG, VERFAHREN EINES KRAFTFAHRZEUGS AN EINER LADESTATION UND VERWENDUNG EINES UWB-SYSTEMS**

(30) Priorität: 29.04.2022 DE 102022204237
(71) Anmelder: VOLKSWAGEN AG, 38440 Wolfsburg (DE)
(72) Erfinder: Ette, Bernd, 38442 Wolfsburg (DE)

(57) **Zusammenfassung**

Die Erfindung betrifft ein Kraftfahrzeug (10) aufweisend ein UWB-System (20) mit zumindest einem UWB-Sendeempfänger (21, 23, 25, 27), der zum Senden und Empfangen von UWB-Pulsen über zumindest eine Antenne (22, 24, 26, 28) eingerichtet ist. Im erfindungsgemäßen Kraftfahrzeug (10) dient das UWB-System (20) nicht nur einer Durchführung eines Positionierungsverfahrens zum Bestimmen der Position eines Ladearms (41) einer Ladestation (40). Vielmehr wird das UWB-System (20) zur Übertragung von Positionierungsangaben zur Führung des Ladearms (41) an eine in Bezug auf das Kraftfahrzeug (10) vorbestimmte Position mit der Ladestation (40) verwendet. Die Erfindung betrifft diese Verwendung des UWB-Systems sowie ein Verfahren eines Kraftfahrzeugs (10).

## Beschreibung

Die Erfindung betrifft ein Kraftfahrzeug, insbesondere ein Kraftfahrzeug, das zum autonomen Laden an einer Ladestation eingerichtet ist und ein für ein Positionierungsverfahren eingerichtetes UWB-System zum Bestimmen einer Position eines Ladearms einer Ladestation aufweist. Darüber hinaus betrifft die Erfindung ein Verfahren eines Kraftfahrzeugs an einer Ladestation sowie die Verwendung eines UWB-Systems für ein Positionierungsverfahren zum Bestimmen einer Position eines Ladearms einer Ladestation.

Nicht nur die Entwicklung autonom fahrender Kraftfahrzeuge, sondern auch deren Eingliederung in den Kraftfahrzeugverkehr schreitet schnell voran, so dass das autonome Fahren ohne eine ständige Überwachung des Fahrers (Level 3) oder mit einer dauerhaft vom Kraftfahrzeug übernommenen Führung (Level 4) in naher Zukunft Normalität auf den Straßen werden wird.

Um neben dem Fahrmodus selbst zu einer weiter automatisierten oder gar automatischen Ausgestaltung des Kraftfahrzeugbetriebs im Alltag zu gelangen, ist ebenfalls der Ladevorgang eines elektrischen Kraftfahrzeugs an einer Ladestation oder der Tankvorgang eines Kraftfahrzeugs mit einem Verbrennungsmotor an einer Tanksäule zu automatisieren, so dass der Fahrer bestenfalls den Ladevorgang nur noch zu autorisieren braucht.

Die Druckschrift US 2021/0094431 A1 beschreibt eine Vorrichtung und ein Verfahren für einen solchen automatisierten Ladevorgang. DE 10 2021 205 260 A1 beschreibt ein Fahrzeugzugangssystem zum Lokalisieren einer tragbaren Zieleinrichtung.

Ladestationen, die ein automatisiertes Laden von Kraftfahrzeugen unterstützen, weisen eine teure und technisch komplexe Infrastruktur auf, die in der Regel kamerabasierte Lösungen zur Positionsbestimmung der Kraftfahrzeuge sowie zur Positionierung eines Ladearms umfassen. Zudem benötigen diese Ladestationen zahlreiche Kommunikationsschnittstellen für die Kommunikation mit den Kraftfahrzeugen und den Kameras und darüber hinaus eine entsprechende Steuerungs- und Rechenlogik, um den Ladearm für das Laden des Kraftfahrzeugs an das Kraftfahrzeug zu führen.

Eine Aufgabe der Erfindung besteht darin, ein Kraftfahrzeug und ein Verfahren eines solchen an einer Ladestation anzugeben, die die Effizienz des Ladevorgangs erhöhen und die notwendige Infrastruktur für das autonome Laden des Kraftfahrzeugs verringern.

Die erfindungsgemäße Aufgabe wird gelöst durch ein Kraftfahrzeug, ein Verfahren eines Kraftfahrzeugs und eine Verwendung gemäß den unabhängigen Patentansprüchen. Bevorzugte Weiterbildungen sind Gegenstand der jeweils rückbezogenen Unteransprüche.

Ein erster Aspekt der Erfindung betrifft ein Kraftfahrzeug, insbesondere ein PKW mit einem Verbrennungs-, Elektro- oder Hybridmotor. Das Kraftfahrzeug weist ein UWB-System mit mindestens einem UWB-Sendeempfänger, der zum Senden und Empfangen von UWB-Pulsen über mindestens eine Antenne eingerichtet ist, und eine Steuereinrichtung auf. Die Steuereinrichtung ist dazu eingerichtet, das UWB-System zum Durchführen eines Positionierungsverfahrens zum Bestimmen einer Position eines Ladearms einer Ladestation anzusteuern. Ferner ist die Steuereinrichtung dazu eingerichtet, Mittel zur drahtlosen Kommunikation oder das UWB-System zur Übertragung von Positionierungsdaten, basierend auf (resultierend aus) dem Positionierungsverfahren, bevorzugt basierend auf der darin bestimmten Position des Ladearms, zur Führung des Ladearms an eine in Bezug auf das Kraftfahrzeug vorbestimmte Position mit der Ladestation anzusteuern.

Die vorbestimmte Position ist insbesondere eine Ladedose oder eine Tanköffnung des Kraftfahrzeugs. Ladestationen schließen gleichermaßen Stationen zum Aufladen einer elektrischen Batterie eines Kraftfahrzeugs als auch Tanksäulen zum Befüllen eines Kraftfahrzeugtanks mit Kraftstoff ein. Der Ladearm ist Teil der Ladestation und dient zur Positionierung eines über ein Ladekabel mit der Ladestation verbundenen kraftfahrzeugseitigen Ladesteckers beziehungsweise zur Positionierung eines über einen Tankschlauch mit der Tanksäule verbundenen Tankstutzens.

Aufgrund der erfindungsgemäßen Ausgestaltung des Kraftfahrzeugs, welches ein Positionierungsverfahren zum Bestimmen der Position des Ladearms und das Übertragen von Positionierungsdaten zur Führung des Ladearms an eine in Bezug auf das Kraftfahrzeug vorbestimmte Position vom Kraftfahrzeug an die Ladestation ermöglicht, verringert sich die notwendige technische Infrastruktur der Ladestation für ein automatisiertes oder autonomes Laden des Kraftfahrzeugs.

Eine mit dem erfindungsgemäßen Kraftfahrzeug für das autonome Laden des Kraftfahrzeugs kompatible Ladestation sollte für das Empfangen der Positionierungsdaten - entweder durch eine direkte Kommunikationsverbindung mit dem Kraftfahrzeug oder zu einem Server, auf welchen das Kraftfahrzeug die Positionierungsdaten übertragen hat - eine Kommunikationsschnittstelle aufweisen. Weiterhin sollte die Ladestation dazu eingerichtet sein, Aktoren zur Bewegung des Ladearms basierend auf den empfangenen Positionierungsdaten anzusteuern.

Die Durchführung des Positionierungsverfahrens zum Bestimmen der Position des Ladearms erfolgt durch das Ultrabreitband-System (englisch: ultra-wideband, UWB). Das UWB-System, insbesondere der UWB-Sendeempfänger, ist zum Senden und Empfangen von Signalen in sehr großen Frequenzbereichen, insbesondere in einem Frequenzbereich von 3,1 bis 10,6 GHz, eingerichtet.

Die Bandbreite des UWB-Systems beträgt mindestens 500 MHz und das UWB-System, insbesondere der UWB-Sendeempfänger, ist bevorzugt zum Senden von Signalen mit einer Sendeleistung zwischen 0,5 mW / -41,3 dBm/MHz ausgebildet. Ferner bevorzugt ist das UWB-System, insbesondere der UWB-Sendeempfänger, gemäß dem Standard IEEE 802.15.4 (insbesondere den Abschnitten zum UWB PHY Layer) und bevorzugt gemäß dem Standard IEEE 802.15.4z ausgebildet. Durch die Streuung der Signale über derart große Frequenzbereiche stören UWB-Signale andere Funksignale, beispielsweise Bluetooth oder WLAN, nur minimal und können daher parallel zu diesen gesendet werden. Ferner können mittels UWB-Sendeempfängern zeitlich stark lokalisierte Sendepulse mit geringer Halbwertsbreite (FWHM) übermittelt werden. Dies basiert auf der hohen Frequenzbreite der Sendepulse (ΔE*Δt > const.). Somit sind UWB-Signale für zeitaufgelöste Laufzeitmessungen besonders geeignet und ermöglichen Positionierungen mit sehr hoher Ortsauflösung, da die Zeit, zu der ein Signal empfangen wird, sehr genau bestimmt werden kann.

Das Bestimmen der Position des Ladearms kann auf Basis der UWB-Signale durch unterschiedliche Positionierungsverfahren erfolgen. Positionierungsverfahren können beispielsweise auf Time-of-Flight/Time-of-Arrival (ToA)-Messungen, auf Angle-of-Arrival (AoA)-Messungen oder auf Channel Impulse Response-Messungen basieren.

Diesen Positionierungsverfahren ist gemein, dass UWB-Signale zwischen Sender und Empfänger für die Positionierungsbestimmung übertragen werden. Folglich bedarf es bei diesen Positionierungsverfahren eines weiteren UWB-Systems, insbesondere eines weiteren UWB-Sendeempfängers, im oder am Ladearm, um die Position des Ladearms bestimmen zu können. Ein solches weiteres UWB-System kann beispielsweise auch an der Ladestation oder im Umfeld der Ladestation angebracht sein, wenn die Koordinaten des Ladearms in Bezug auf das weitere UWB-System an das Kraftfahrzeug übertragen werden.

Darüber hinaus ist auch die Durchführung von Positionierungsverfahren möglich, welche allein auf dem UWB-System des Kraftfahrzeugs basieren und kein UWB-System, insbesondere kein UWB-Sendeempfänger, an der Ladestation beziehungsweise dem Ladearm benötigen. Ein solches Positionierungsverfahren ist beispielsweise ein UWB-Radar-Verfahren, das, in Analogie zum bekannten Funkwellen-Radar, UWB-Pulse aussendet und die Laufzeiten der von der Umgebung reflektierten UWB-Pulse bestimmt.

Bevorzugt detektiert das UWB-System ebenfalls Objekte in der Umgebung, insbesondere in der Bewegungsbahn, des Kraftfahrzeugs.

Das UWB-System weist mindestens einen UWB-Sendeempfänger auf. Der UWB-Sendeempfänger ist dabei zum Senden und Empfangen von UWB-Pulsen via mindestens einer Antenne eingerichtet. Das UWB-System befindet sich bevorzugt auf der Seite der Ladedose des Kraftfahrzeugs. Besonders bevorzugt weist das Kraftfahrzeug vier UWB-Systeme auf, wobei sich jeweils ein UWB-System an einer Fahrzeugecke oder an einem Fenster des Fahrzeugs befindet.

Die Steuereinrichtung weist bevorzugt mindestens einen integrierten Schaltkreis, Mikrocontroller oder ASIC auf und ist zum Durchführen der folgenden Operationen ausgebildet und eingerichtet, sprich aufgebaut und programmiert. Die Steuereinrichtung kann zentral oder dezentral aufgebaut sein. Bevorzugt ist die Steuereinrichtung modular aufgebaut und teilweise in das oder die UWB-Systeme integriert, beispielsweise hinsichtlich der Steuerung des Positionierungsverfahrens zum Bestimmen der Position des Ladearms.

Die Steuereinrichtung des erfindungsgemäßen Kraftfahrzeugs ist insbesondere dazu ausgebildet, das UWB-System des Kraftfahrzeugs so anzusteuern, dass beispielsweise auf Laufzeitmessungen basierte Positionierungsverfahren, insbesondere Time-of-Flight/Time-of-Arrival (ToA)-Messungen, Angle-of-Arrival (AoA)-Messungen oder UWB-Radar-Messungen, oder auf Channel Impulse Response-Messungen basierte Positionierungsverfahren durchgeführt werden.

Ferner ist die Steuereinrichtung dazu eingerichtet, das Mittel des Kraftfahrzeugs zur drahtlosen Kommunikation oder das UWB-System zur Übertragung von Positionierungsdaten anzusteuern. Bei der Übertragung der Positionierungsdaten über das UWB-System erfolgt die Übertragung bevorzugt ohne eine Hardware-Modifikation bekannter UWB-Systeme, eine Anpassung der mittels des UWB-Systems empfangenen und gesendeten Signale an andere Funk-Standards, wie beispielsweise WLAN, kann bevorzugt mittels Software als software defined radio erfolgen.

Bevorzugt weist das Kraftfahrzeug ferner ein Mittel zur drahtlosen Kommunikation auf. Mit dem Mittel kann beispielsweise eine Kommunikationsverbindung mit einer Ladestation, einem Netzwerk oder auch einem mobilen Endgerät eines Nutzers aufgebaut werden, um insbesondere Positionierungsdaten, Autorisierungsdaten sowie insbesondere alle weiteren für ein autonomes Ladeverfahren notwendigen Daten zu senden und zu empfangen. Das Mittel zur drahtlosen Kommunikation ist beispielsweise ein WLAN-System mit einem WLAN-Sendeempfänger oder ein Bluetooth-System mit einem Bluetooth-Sendeempfänger.

Bevorzugt ist die Steuereinrichtung dazu eingerichtet, das Mittel zur drahtlosen Kommunikation des Kraftfahrzeugs zur Übertragung von Positionierungsdaten anzusteuern. Die Übertragung der Positionierungsdaten über das Mittel zur drahtlosen Kommunikation ermöglicht die gleichzeitige Durchführung des Positionierungsverfahrens durch das UWB-System und die Übertragung der Positionierungsdaten.

Die Positionierungsdaten umfassen bevorzugt Positionierungskoordinaten, insbesondere Positionierungskoordinaten in dem Bezugsystem des Ladearms.

Vorteilhafte Weiterbildungen der Erfindung sind in den Unteransprüchen, der Beschreibung und den Zeichnungen angegeben.

In bevorzugter Ausgestaltung der Erfindung ist vorgesehen, dass das Kraftfahrzeug ein Zugangssystem zum elektronisch gesteuerten Verriegeln und Entriegeln zumindest einer Kraftfahrzeugtür des Kraftfahrzeugs aufweist und die Steuereinrichtung dazu eingerichtet ist, das UWB-System zum Durchführen eines auf Laufzeitmessungen basierenden Positionierungsverfahrens zum Bestimmen der Position eines zweiten UWB-Systems anzusteuern, und basierend auf einem Ergebnis des Positionierungsverfahrens, das Zugangssystem zum Verriegeln oder Entriegeln der zumindest einen Kraftfahrzeugtür anzusteuern.

Das Zugangssystem weist bevorzugt eine Zentralverriegelung, besonders bevorzugt eine elektrisch betätigte Zentralverriegelung, auf, die zum Entriegeln und Verriegeln der Schlösser der zumindest einen Fahrzeugtür ausgebildet ist. Das Zugangssystem ist bevorzugt dazu ausgebildet, nur bestimmte Fahrzeugtüren, beispielsweise eine Fahrertür oder eine Heckklappe, zu öffnen. Alternativ ist das Zugangssystem dazu ausgebildet, alle Fahrzeugtüren des Fahrzeugs gleichzeitig zu öffnen.

Das Fahrzeugzugangssystem ermöglicht es vorteilhaft, dass der Nutzer den das zweite UWB-System umfassenden Fahrzeugschlüssel im Gegensatz zu einer Funkfernbedienung nicht aktiv benutzen muss. Es muss also kein Tastendruck ausgeführt werden, das Mitführen des Fahrzeugschlüssels als Identifikationsmerkmal ist ausreichend. Somit muss der Nutzer den Schlüssel nicht in die Hand nehmen, sondern kann ihn beispielsweise in der Tasche belassen. Das Fahrzeug erkennt automatisch die Annäherung des Schlüssels und erlaubt das Öffnen der Türen.

Bei dem Ergebnis handelt es sich zumindest um eine Entfernung zwischen dem Fahrzeug und dem Fahrzeugschlüssel, insbesondere sofern nur ein UWB-System im Fahrzeug vorhanden ist. Weist das Fahrzeug mehrere UWB-Systeme auf, besonders bevorzugt an jeder Fahrzeugecke oder jeweils in einem seitlichen Fahrzeugfenster, wird mittels der Laufzeitmessungen eine Peilung (Triangulation) des Schlüssels und dessen relative Lage zum Fahrzeug bestimmt.

Zugangssysteme, die auf einem von einem UWB-System durchgeführten Positionierungsverfahren basieren, werden in modernen Kraftfahrzeugen verbaut. Die Durchführung eines Positionierungsverfahrens zum Bestimmen einer Position eines Ladearms durch ein solches UWB-System ermöglicht die Bereitstellung eines Kraftfahrzeuges zum automatisierten oder autonomen Laden mit einer schlanken technischen Infrastruktur.

In weiterer bevorzugter Ausgestaltung der Erfindung ist vorgesehen, dass die Steuereinrichtung des Kraftfahrzeugs dazu eingerichtet ist, das UWB-System zum Durchführen eines auf Laufzeitmessungen basierenden Positionierungsverfahrens zum Bestimmen der Position des Ladearms anzusteuern. Solche auf Laufzeitmessungen basierende Positionierungsverfahren sind beispielsweise Time-of-Flight/Time-of-Arrival (ToA)-Messungen, Angle-of-Arrival (AoA)-Messungen oder UWB-Radar-Messungen.

Die Steuereinrichtung des erfindungsgemäßen Kraftfahrzeugs ist bevorzugt dazu ausgebildet, für ToA-Messungen das UWB-System des Kraftfahrzeugs so anzusteuern, dass ein erster UWB-Puls zum Zeitpunkt t1 an das zweite UWB-System gesendet wird, und so anzusteuern, dass ein Zeitpunkt t2, an dem ein zweiter UWB-Puls von dem zweiten UWB-System empfangen wird, detektiert wird. Ferner ist die Steuereinrichtung dazu ausgebildet, anhand der Zeitpunkte t1 und t2 sowie abgelegter Werte für die Lichtgeschwindigkeit und eine mittlere Verarbeitungszeit tVB einen Abstand zwischen dem ersten UWB-System und dem zweiten UWB-System zu ermitteln. Hierbei bedarf es eines weiteren UWB-Systems, insbesondere eines weiteren UWB-Sendeempfängers, im oder am Ladearm, um die Position des Ladearms bestimmen zu können. Positionsbestimmungen mit diesen Positionierungsverfahren erzielen eine hohe Ortsauflösung.

Ferner ist die Steuereinrichtung des erfindungsgemäßen Kraftfahrzeugs bevorzugt dazu ausgebildet, das UWB-System des Kraftfahrzeugs so anzusteuern, dass dieses UWB-Radar-Messungen durchführt. Hierbei sendet das UWB-System UWB-Pulse aus und detektiert die von der Umgebung reflektierten UWB-Pulse. Die Steuereinrichtung ist wiederum dazu eingerichtet, aus den unterschiedlichen Sende- und Empfangszeiten der UWB-Pulse deren Laufzeiten zu bestimmen. Auf diese Art kann die Position des Ladearms bestimmt werden, ohne dass dieser selbst ein UWB-System, insbesondere ein UWB-Sendeempfänger, aufweist. Ein auf UWB-Radar basiertes Positionierungsverfahren ermöglicht es, dass die notwendige technische Infrastruktur der Ladestation für ein automatisiertes oder autonomes Laden gering ist.

In weiterer bevorzugter Ausgestaltung der Erfindung ist vorgesehen, das die Steuereinrichtung dazu eingerichtet ist, das UWB-System zum Durchführen eines auf Channel Impulse Response-Messungen basierendes Positionierungsverfahrens zum Bestimmen der Position des Ladearms anzusteuern. Aufgrund der zeitlich stark lokalisierten UWB-Pulse ist es möglich, aus empfangenen UWB-Pulsen mit deren sich aus dem Einfluss der Umgebung auf den gesendeten UWB-Puls ergebende Impulsantwort Informationen zu dem Propagationsweg der UWB-Pulse zu extrahieren. Auf diese Weise ist eine schnelle Positionsbestimmung des Ladearms mit einer sehr hohen Ortgenauigkeit möglich, insbesondere in einer dynamischen Umgebung, die durch eine Relativbewegung zwischen Kraftfahrzeug und Ladearm gekennzeichnet ist.

In einer bevorzugten Ausführungsform ist vorgesehen, dass die Positionierungsdaten Steuerbefehle für die Positionierung des Ladearms umfassen. Dies verringert den erforderlichen Rechen- und Steueraufwand zum Führung des Ladearms auf Seiten der Ladestation, indem die Führung des Ladearms im Wesentlichen vom Kraftfahrzeug durchgeführt wird und die Ladestation die Steuerbefehle für die Positionierung des Ladearms umsetzt.

In einer weiteren bevorzugten Ausführungsform ist vorgesehen, dass die Steuereinrichtung dazu eingerichtet ist, das UWB-System für die Übertragung von Daten zur Autorisierung mit einem mobilen Endgerät anzusteuern. Daten zur Autorisierung können beispielsweise eine vom Kraftfahrzeug an das mobile Endgerät gesendete Eingabeaufforderung oder ein vom mobilen Endgerät an das Kraftfahrzeug gesendeter Befehl sein. Auf diese Weise kann beispielsweise der Nutzer des Fahrzeugs über ein Endgerät, insbesondere ein mobiles Smartphone, eine Funkfernbedienung oder einen Fahrzeugschlüssel, das Positionierungsverfahren, den Ladevorgang des Kraftfahrzeugs an der Ladestation oder eine Zahlung des Ladevorgangs autorisieren oder initiieren. Eine Autorisierung kann die Identifikation des Nutzers umfassen, insbesondere über ein Mittel zur biometrischen Identifikation des Nutzers, beispielsweise ein Fingerabdruck- oder Gesichtsscanner eines Smartphones.

Alternativ ist die Steuereinrichtung dazu eingerichtet, das Mittel des Kraftfahrzeugs zur drahtlosen Kommunikation, beispielsweise ein WLAN- oder Bluetooth-System, an Stelle von dem UWB-System für die Übertragung von Daten zur Autorisierung mit einem mobilen Endgerät anzusteuern.

Besonders bevorzugt ist die Steuereinrichtung dazu eingerichtet, das UWB-System oder ein Mittel der drahtlosen Kommunikation des Kraftfahrzeugs für die Übertragung von Daten zur Zahlung des Ladevorgangs des Kraftfahrzeugs an der Ladestation mit einem mobilen Endgerät anzusteuern.

Die Übertragung von Daten zur Autorisierung und Zahlung zwischen dem Kraftfahrzeug und dem mobilen Endgerät ermöglicht einen vereinfachten und effizienten Ladevorgang des Kraftfahrzeugs bei einer geringen notwendigen technischen Infrastruktur der Ladestation.

In einer weiteren bevorzugten Ausführungsform ist vorgesehen, dass das Kraftfahrzeug ein Bluetooth-System mit mindestens einem Bluetooth-Sendeempfänger umfasst, der zum Senden und Empfangen von Bluetooth-Signalen über mindestens eine Bluetooth-Antenne eingerichtet ist, und die Steuereinrichtung dazu eingerichtet ist, das Bluetooth-System zum Durchführen eines Positionierungsverfahrens zum Bestimmen der Position des Ladearms anzusteuern. Hierdurch ist ein automatisierter oder autonomer Ladevorgang des Kraftfahrzeugs ebenfalls an Ladestationen möglich, die über ein Bluetooth-System verfügen. Im Zusammenspiel mit dem auf den UWB-Signalen basierenden Positionierungsverfahren kann ein zusätzliches auf Bluetooth-Signalen basierendes Positionierungsverfahren die Ortsgenauigkeit der Bestimmung der Position des Ladearms steigern.

Ein weiterer Aspekt der Erfindung betrifft ein Verfahren eines Kraftfahrzeugs, wie es beispielsweise vorstehend beschrieben ist, an einer Ladestation. Das Kraftfahrzeug weist eine Steuereinrichtung und ein UWB-System mit mindestens einem UWB-Sendeempfänger auf, der zum Senden und Empfangen von UWB-Pulsen über mindestens eine Antenne eingerichtet ist. Die Ladestation weist einen Ladearm auf. Das Verfahren umfasst ein Ansteuern des UWB-Systems zum Durchführen eines Positionierungsverfahrens zum Bestimmen einer Position des Ladearms und ein Übertragen von Positionierungsdaten zwischen dem UWB-System und der Ladestation zur Führung des Ladearms an eine in Bezug auf das Kraftfahrzeug vorbestimmte Position.

Die Durchführung des Positionierungsverfahrens zum Bestimmen der Position des Ladearms umfasst dabei sowohl Positionierungsverfahren, die auf Laufzeitmessungen basieren, wie beispielsweise Time-of-Flight/Time-of-Arrival (ToA)-Messungen, Angle-of-Arrival (AoA)-Messungen oder UWB-Radar-Messungen, als auch auf Channel Impulse Response-Messungen basierende Positionierungsverfahren.

Bevorzugt umfasst das Kraftfahrzeug ein Mittel zur drahtlosen Kommunikation, beispielsweise ein WLAN- oder Bluetooth-System. Bevorzugt umfasst die Ladestation ein weiteres Mittel zur drahtlosen Kommunikation, beispielsweise ein WLAN- oder Bluetooth-System, und/oder ein UWB-System, so dass die Positionierungsdaten oder auch Daten zur Autorisierung oder Zahlung des Ladevorgangs zwischen dem UWB-System des Fahrzeugs oder dem Mittel zur drahtlosen Kommunikation des Fahrzeugs und dem UWB-System der Ladestation oder dem Mittel zur drahtlosen Kommunikation der Ladestation übertragen werden können.

Auf diese Weise wird ein Verfahren zum effizienten automatisierten oder autonomen Laden eines Kraftfahrzeugs an einer Ladestation mit einer geringen notwendigen technischen Infrastruktur auf Seiten der Ladestation bereitgestellt.

In einer bevorzugten Durchführungsform des erfindungsgemäßen Verfahrens weist die Ladestation ein Mittel zur drahtlosen Kommunikation oder ein drittes UWB-System auf, welches mindestens einen Ladestation-UWB-Sendeempfänger aufweist, der zum Senden und Empfangen von UWB-Pulsen über mindestens eine Ladestationsantenne eingerichtet ist, und erfolgt das Verfahren mittels eines auf Laufzeitmessungen basierenden Positionierungsverfahrens.

Auf Laufzeitmessungen basierende Positionierungsverfahren, wie beispielsweise Time-of-Flight/Time-of-Arrival (ToA)-Messungen, Angle-of-Arrival (AoA)-Messungen oder UWB-Radar-Messungen, erzielen eine Ortsauflösung bei der Bestimmung der Ladearmposition.

In einer weiteren bevorzugten Durchführungsform des erfindungsgemäßen Verfahrens umfasst die Ladestation ein drittes UWB-System, welches mindestens einen Ladestation-UWB-Sendeempfänger aufweist, der zum Senden und Empfangen von UWB-Pulsen über mindestens eine Ladestationsantenne eingerichtet ist, und das Positionierungsverfahren auf Channel Impulse Response-Messungen basiert.

Hierdurch kann die Bestimmung der Position des Ladearms beschleunigt und ihre Ortsauflösung weiter verbessert werden.

In einer bevorzugten Durchführungsform des erfindungsgemäßen Verfahrens umfassen die Positionierungsdaten Steuerbefehle für die Positionierung des Ladearms.

Somit wird der erforderliche Rechen- und Steueraufwand zur Führung des Ladearms auf Seiten der Ladestation verringert.

In einer weiteren bevorzugten Durchführungsform des erfindungsgemäßen Verfahrens erfolgt ein Übertragen von Daten zur Autorisierung zwischen dem UWB-System und einem mobilen Endgerät. Bevorzugt erfolgt ein Übertragen von Daten zur Autorisierung zwischen einem Mittel zur drahtlosen Kommunikation des Kraftfahrzeugs und einem mobilen Endgerät.

Bevorzugt erfolgt auch ein Übertragen von Daten zur Zahlung des Ladevorgangs zwischen dem Kraftfahrzeug, insbesondere dem UWB-System des Kraftfahrzeugs oder einem Mittel zur drahtlosen Kommunikation des Kraftfahrzeugs, und einem mobilen Endgerät.

Die Übertragung von Daten zur Autorisierung und Zahlung zwischen dem Kraftfahrzeug und dem mobilen Endgerät ermöglicht eine umfassende Automatisierung des gesamten Ladevorgangs des Kraftfahrzeugs an der Ladestation und verringert die an der Ladestation bereitzustellende technische Infrastruktur.

In einer bevorzugten Durchführungsform des erfindungsgemäßen Verfahrens umfasst das Kraftfahrzeug ein Bluetooth-System mit mindestens einem Bluetooth-Sendeempfänger, der zum Senden und Empfangen von Bluetooth-Signalen über mindestens eine Bluetooth-Antenne eingerichtet ist. Ferner umfasst die Ladestation ein zweites Bluetooth-System mit mindestens einem Ladestation-Bluetooth-Sendeempfänger, der zum Senden und Empfangen von Bluetooth-Signalen über mindestens eine Ladestation-Bluetooth-Antenne eingerichtet ist, und erfolgt ein Ansteuern des Bluetooth-Systems zum Durchführen eines Positionierungsverfahrens zum Bestimmen der Position des Ladearms.

Die Durchführung von Positionierungsverfahren über Bluetooth-Signale erhöht in Kombination mit den auf UWB-Signalen basierenden Positionierungsverfahren die Ortsauflösung der Bestimmung der Ladearmposition.

Die einzelnen Verfahrensschritte des erfindungsgemäßen Verfahrens sind ferner bevorzugt als ein oder mehrere Prozesse ausgebildet, die auf einem oder mehreren Prozessoren in einem oder mehreren elektronischen Rechengeräten laufen und beim Ausführen von einem oder mehreren Computerprogrammen erzeugt werden. Die Rechengeräte sind dabei bevorzugt dazu ausgebildet, mit anderen Komponenten, insbesondere einem UWB-System, zusammenzuarbeiten, um die hierin beschriebenen Funktionalitäten zu verwirklichen.

Die Anweisungen der Computerprogramme sind ebenfalls bevorzugt in einem Speicher abgelegt, wie beispielsweise einem RAM-Element. Die Computerprogramme können jedoch auch in einem nicht-flüchtigen Speichermedium, wie beispielsweise einer CD-ROM, einem Flash-Speicher oder dergleichen, abgelegt sein.

Dem Fachmann ist ferner ersichtlich, dass die Funktionalitäten von mehreren Computern (Datenverarbeitungsgeräten) kombiniert oder in einem einzigen Gerät kombiniert sein können oder dass die Funktionalität von einem bestimmten Datenverarbeitungsgerät auf eine Vielzahl von Geräten verteilt vorliegen kann, um die Schritte des erfindungsgemäßen Verfahrens auszuführen, ohne vom erfindungsgemäßen Verfahren abzuweichen.

Ein weiterer Aspekt der Erfindung betrifft ein Computerprogramm, umfassend Befehle, die bei der Ausführung des Programms durch einen Computer, wie beispielsweise eine Steuereinrichtung eines Kraftfahrzeugs aufweisend ein UWB-System mit zumindest einem UWB-Sendeempfänger, der zum Senden und Empfangen von UWB-Pulsen über zumindest eine Antenne eingerichtet ist, diesen veranlassen, das erfindungsgemäße Verfahren, insbesondere ein auf Laufzeitmessungen, insbesondere auf UWB-Radar, oder auf Channel Impulse Response-Messungen von UWB-Pulsen basierendes Positionierungsverfahren für die Bestimmung einer Position eines Ladearms durchzuführen; ferner bevorzugt Daten zur Autorisierung zwischen einem UWB-Sendeempfänger eines Kraftfahrzeuges oder einem Mittel zur drahtlosen Kommunikation des Kraftfahrzeuges und einem mobilen Endgerät zu übertragen.

Ein weiterer Aspekt der vorliegenden Erfindung betrifft eine Verwendung eines UWB-Systems eines Kraftfahrzeugs zum Durchführen eines auf Laufzeitmessungen oder Channel Impulse Response-Messungen basierenden Positionierungsverfahrens zum Bestimmen einer Position eines Ladearms einer Ladestation zur Führung des Ladearms an eine in Bezug auf das Kraftfahrzeug vorbestimmte Position.

In einer bevorzugten Verwendungsform wird das UWB-System zum Durchführen eines auf Laufzeitmessungen basierenden Positionierungsverfahrens zum Bestimmen der Position eines zweiten UWB-Systems zum Verriegeln oder Entriegeln zumindest einer Kraftfahrzeugtür verwendet.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: eine schematische Darstellung eines erfindungsgemäßen Kraftfahrzeugs gemäß einer Ausführungsform und eine erste Ladestation;
- Figur 2: eine schematische Darstellung eines erfindungsgemäßen Kraftfahrzeugs gemäß einer Ausführungsform und eine zweite Ladestation und
- Figur 3: eine schematische Darstellung eines erfindungsgemäßen Verfahrens gemäß einer Durchführungsform.

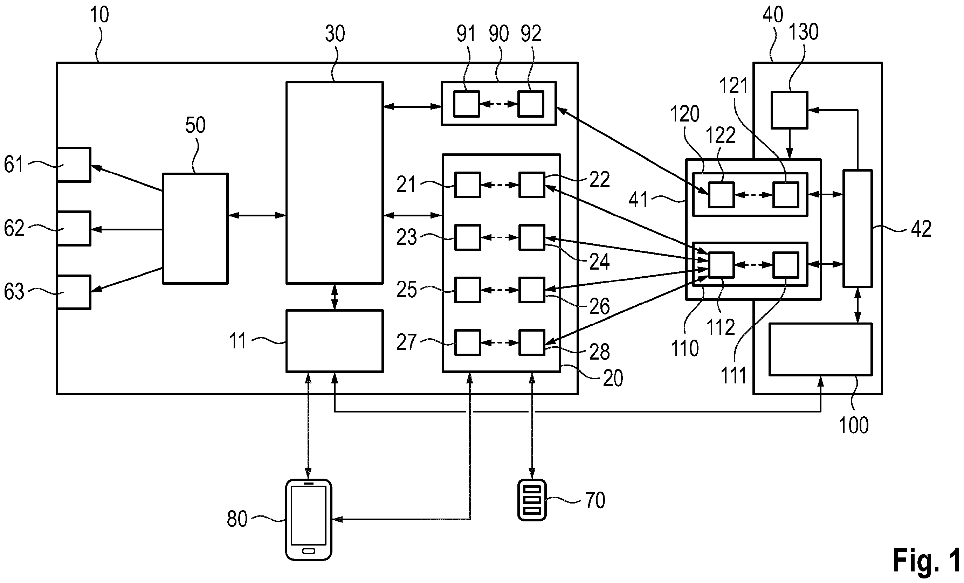

Figur 1 zeigt eine schematische Darstellung, insbesondere ein Blockdiagramm eines beispielhaften Kraftfahrzeugs 10, insbesondere eines zweispurigen Kraftfahrzeugs mit Verbrennungs-, Elektro- oder Hybridmotor, und eine Ladestation 40, die zum automatisierten oder autonomen Laden des Kraftfahrzeugs 10 verwendet werden kann.

Das Kraftfahrzeug 10 weist ein Zugangssystem 50 auf, das zur Kontrolle, insbesondere zum Entriegeln und Verriegeln, von zumindest einer Fahrzeugtür 61, 62, 63 des Kraftfahrzeugs 10 ausgebildet ist. Das Zugangssystem 50 kontrolliert insbesondere eine Fahrertür 61, eine Beifahrertür 62 und eine Heckklappe 63 des Kraftfahrzeugs 10 in Abhängigkeit einer Entfernung und/oder einer Position eines Fahrzeugschlüssels 70. Ein Einstecken des Schlüssels 70 in die Schlösser der Türen 61, 62, 63 ist möglich aber nicht notwendig.

Das Kraftfahrzeug 10 weist ferner ein UWB-System 20 mit einem UWB-Sendeempfänger 21 und einer UWB-Antenne 22 am Fenster der Fahrertür 61, mit einem UWB-Sendeempfänger 23 und einer UWB-Antenne 24 am Fenster der Beifahrertür 62, mit einem UWB-Sendeempfänger 25 und einer UWB-Antenne 26 am Fenster der linken hinteren Tür und mit einem UWB-Sendeempfänger 27 und einer UWB-Antenne 28 am Fenster der rechten hinteren Tür auf. Die UWB-Sendeempfänger 21, 23, 25, 27 sind dazu ausgebildet und eingerichtet, UWB-Pulse über die UWB-Antennen 22, 24, 26, 28 zu senden und zu empfangen. Das UWB-System 20 wird von einer Steuereinrichtung 30 des Kraftfahrzeugs 10 kontrolliert, insbesondere via einen geeigneten Datenbus, der die Steuereinrichtung 30 und das UWB-System 20 verbindet.

Unter der Kontrolle der Steuereinrichtung 30 ist das UWB-System 20 dazu ausgebildet, mittels eines auf Laufzeitmessungen von UWB-Pulsen basierenden Positionierungsverfahrens die Entfernung des Fahrzeugschlüssels 70 zu detektieren. Hierzu sendet das UWB-System 20 unter der Kontrolle der Steuereinrichtung 30 einen ersten UWB-Puls zu einem Zeitpunkt t1 an den Fahrzeugschlüssel 70. In Reaktion empfängt das UWB-System einen zweiten UWB-Puls von dem Fahrzeugschlüssel zu einem Zeitpunkt t2 (in der Figur durch Pfeile dargestellt). Basierend auf diesen Zeiten und gegebenenfalls weiteren in einem Speicher des UWB-Systems 20 oder einem Speicher der Steuereinrichtung 30 gespeicherten Informationen, beispielsweise zu einer Verarbeitungszeit tVB des ersten UWP-Pulses im Fahrzeugschlüssel 70, ermittelt das UWB-System 20 oder die Steuereinrichtung 30 eine Entfernung des Kraftfahrzeugs 10 von einer Antenne eines zweiten UWB-Systems des Fahrzeugschlüssels 70.

Darüber hinaus ist das UWB-System 20 unter der Kontrolle der Steuereinrichtung 30 dazu ausgebildet, mittels auf Laufzeitmessungen von UWB-Pulsen basierende Positionierungsverfahren die Position eines Ladearms 41 einer Ladestation 40 zu bestimmen. Hierzu werden UWB-Pulse zwischen dem UWB-System 20 unter der Kontrolle der Steuereinrichtung 30 und einem Ladestation-UWB-System 110 übertragen, welches einen Ladestation-UWB-Sendeempfänger 111 und eine Ladestation-UWB-Antenne 112 umfasst und im Ladearm 41 angeordnet ist. Ein weiteres Positionierungsverfahren, welches von der Steuereinrichtung 30 im Zusammenspiel mit dem UWB-System 20 für die Bestimmung der Position des Ladearms 41 angewandt wird und die Übertragung von UWB-Pulsen zwischen dem UWB-System 20 des Kraftfahrzeugs 10 und dem Ladestation-UWB-System 110 im Ladearm 41 einbezieht, basiert auf Channel Impulse Response-Messungen.

Die aus den Positionierungsverfahren gewonnenen Positionierungsdaten werden von dem UWB-System 20 des Kraftfahrzeugs 10 an die Ladestation 40 übertragen. Eine solche Übertragung kann an das Ladestation-UWB-System 110 oder auch an ein WLAN-System 100 der Ladestation 40 erfolgen. Die Übertragung der Positionierungsdaten kann optional auch zwischen einem WLAN-System 11 des Kraftfahrzeugs 10 und dem WLAN-System 100 der Ladestation 40 erfolgen. Auf Basis der Positionierungsdaten führt die Ladestation 40 den Ladearm 41 an die Ladedose des Kraftfahrzeugs 10, damit ein Laden des Kraftfahrzeugs 10 erfolgen kann. Die Bewegung des Ladearms 41 erfolgt über Aktoren 130, die von einer Steuereinrichtung 42 der Ladestation 40 kontrolliert werden.

Alternativ zu den auf UWB-Pulsen basierenden Positionierungsverfahren ist das Kraftfahrzeug 10 ebenfalls zur Durchführung von Positionierungsverfahren basierend auf Bluetooth-Signalen eingerichtet. Hierfür steuert die Steuereinrichtung 30 ein Bluetooth-System 90 mit einem Bluetooth-Sendeempfänger 91 und einer Bluetooth-Antenne 92 zur Übertragung von Bluetooth-Signalen mit einem Ladestation-Bluetooth-System 120 an, welches einen Ladestation-Bluetooth-Sendeempfänger 121 und eine Ladestation-Bluetooth-Antenne 122 aufweist.

Das UWB-System 20 und das WLAN-System 11 des Kraftfahrzeugs 10 können ferner eine Kommunikationsverbindung zu einem mobilen Endgerät 80 etablieren, worüber der Ladevorgang des Kraftfahrzeugs 10 an der Ladestation 40 initiiert, autorisiert und gezahlt werden kann.

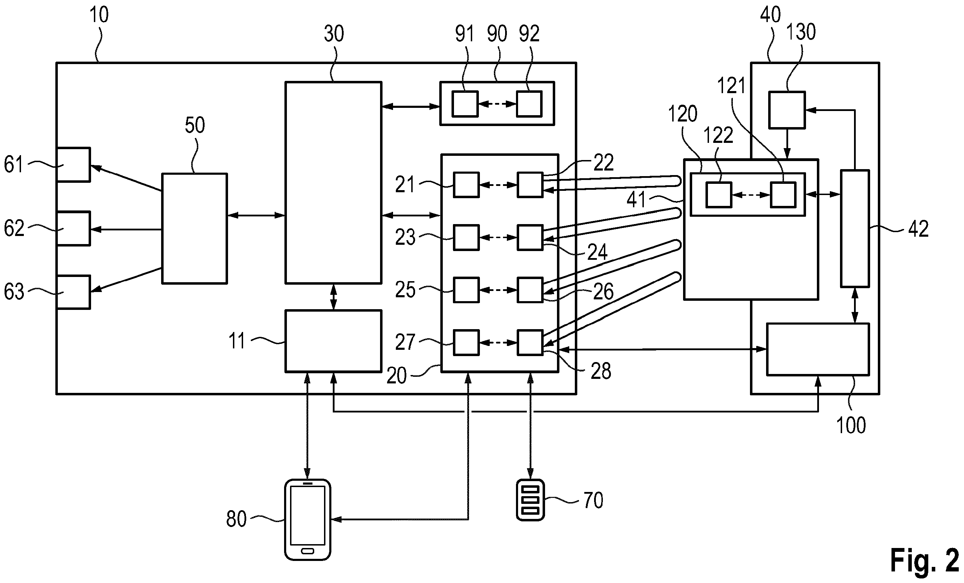

Figur 2 zeigt die gleiche schematische Darstellung, insbesondere das gleiche Bockdiagramm des Kraftfahrzeugs 10 der Figur 1 und eine weitere Ladestation 40, die in diesem Fall jedoch über kein UWB-System verfügt.

Unter der Kontrolle der Steuereinrichtung 30 ist das UWB-System 20 dazu ausgebildet, mittels UWB-Radar-Messungen die Position des Ladearms 41 zu bestimmen. Hierfür muss sich das Kraftfahrzeug 10 innerhalb des Detektionsradius des UWB-Radars an den Ladearm 41 heranbewegen, damit das Positionierungsverfahren erfolgen kann. Die auf diese Art gewonnenen Positionierungsdaten können entweder vom UWB-System 20 oder vom WLAN-System 11 des Kraftfahrzeugs 10 an das WLAN-System 100 der Ladestation 40 übertragen werden.

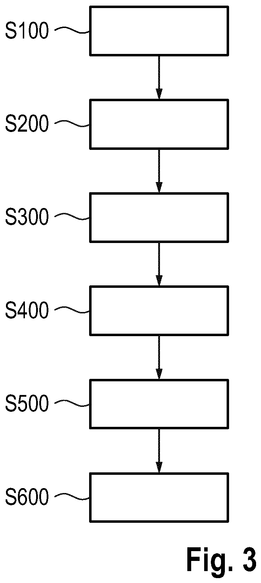

Figur 3 zeigt eine schematische Darstellung eines erfindungsgemäßen Verfahrens gemäß einer Durchführungsform. In einem ersten Schritt S100 des erfindungsgemäßen Verfahrens steuert die Steuereinrichtung 30 das UWB-System 20 zum Durchführen eines auf Laufzeitmessungen basierenden Verfahrens zum Bestimmen der Entfernung des Fahrzeugschlüssels 70 an. Mit anderen Worten führen Steuereinrichtung 30 und UWB-System 20 ein RSAD - keyless go Verfahren zur Lagebestimmung des Schlüssels 70 durch.

In einem Schritt S200 erfolgt ein Entriegeln und gegebenenfalls Öffnen zumindest einer Fahrzeugtür durch das Zugangssystem 50. Dieser Vorgang basiert dabei auf dem Ergebnis der Lagebestimmung des Fahrzeugschlüssels 70 durch das UWB-System 20 und die Steuereinrichtung 30, dass der Fahrzeugschlüssel 70 sich innerhalb einer vorbestimmten Entfernung um das Kraftfahrzeug 10 befindet. Anschließend erfolgt ein Starten des Kraftfahrzeugs 10 und eine Aufnahme des Fahrbetriebs des Kraftfahrzeugs 10. Mit Schritt S200 ist somit die Primärfunktion des UWB-Systems 20 beendet. Ein erneutes Orten des Fahrzeugschlüssels 70 während der Fahrt des Kraftfahrzeugs 10 ist nicht notwendig. Im erfindungsgemäßen Kraftfahrzeug 10 steht das UWB-System 20 somit für ein Positionierungsverfahren zur Bestimmung der Position eines Ladearms 41 einer Ladestation 40 zur Verfügung.

In einem Schritt S300 wird die Nähe des Kraftfahrzeugs 10 zu einer freien Ladestation erkannt und es erfolgt eine Autorisierungsanfrage an den Nutzer des Kraftfahrzeugs 10, um mit dem Ladevorgang des Kraftfahrzeugs 10 an der Ladestation 40 zu beginnen. Die Autorisierungsanfrage wird dabei entweder vom Infotainmentsystem des Kraftfahrzeugs 10 angezeigt oder auf ein mobiles Endgerät 80 des Nutzers übertragen.

Autorisiert der Nutzer den Ladevorgang, so wird das Verfahren in Schritt S400 mit der Durchführung eines Positionierungsverfahrens zur Bestimmung der Position des Ladearms 41 fortgeführt. Ein solches Positionierungsverfahren kann auf Laufzeitmessungen oder auf Channel Impulse Response-Messungen von UWB-Pulsen basieren. Ferner kann der Schritt S400 Positionierungsverfahren basierend auf Bluetooth-Signalen umfassen.

In einem Schritt S500 werden die aus den Positionierungsverfahren gewonnenen Positionierungsdaten an die Ladestation 40 übertragen. Die Übertragung erfolgt von dem UWB-System 20 des Kraftfahrzeugs 10 oder einem WLAN-System 11 des Kraftfahrzeugs 10 oder einem anderen Mittel zur drahtlosen Kommunikation des Kraftfahrzeugs 10 an das Ladestation-UWB-System 110 oder einem WLAN-System 100 der Ladestation 40 oder einem anderen Mittel zur drahtlosen Kommunikation der Ladestation 40. Auf Basis der übertragenen Positionierungsdaten wird der Ladearm 41 zum Laden des Kraftfahrzeugs 10 an die Ladedose des Kraftfahrzeugs 10 geführt.

In einem Schritt S600 wird das Kraftfahrzeug 10 geladen und der Ladevorgang gezahlt. Die Zahlung kann über das mobile Endgerät 80 des Nutzers erfolgen, welches entweder über das UWB-System 20 oder das WLAN-System 11 mit dem Kraftfahrzeug 10 verbunden ist oder alternativ über das Ladestation-UWB-System 110 oder das WLAN-System 100 der Ladestation 40.

### Bezugszeichenliste

- 10: Kraftfahrzeug
- 11: WLAN-System des Kraftfahrzeugs
- 20: UWB-System
- 21: UWB-Sendeempfänger am Fenster der Fahrertür
- 22: UWB-Antenne am Fenster der Fahrertür
- 23: UWB-Sendeempfänger am Fenster der Beifahrertür
- 24: UWB-Antenne am Fenster der Beifahrertür
- 25: UWB-Sendeempfänger am Fenster der linken hinteren Tür
- 26: UWB-Antenne am Fenster der linken hinteren Tür
- 27: UWB-Sendeempfänger am Fenster der rechten hinteren Tür
- 28: UWB-Antenne am Fenster der rechten hinteren Tür
- 30: Steuereinrichtung
- 40: Ladestation
- 41: Ladearm
- 42: Steuereinrichtung der Ladestation
- 50: Zugangssystem
- 61: Fahrertür
- 62: Beifahrertür
- 63: Heckklappe
- 70: Fahrzeugschlüssel beziehungsweise zweites UWB-System
- 80: mobiles Endgerät
- 90: Bluetooth-System
- 91: Bluetooth-Sendeempfänger
- 92: Bluetooth-Antenne
- 100: WLAN-System der Ladestation
- 110: Ladestation-UWB-System
- 111: Ladestation-UWB-Sendeempfänger
- 112: Ladestation-UWB-Antenne
- 120: Ladestation-Bluetooth-System
- 121: Ladestation-Bluetooth-Sendeempfänger
- 122: Ladestation-Bluetooth-Antenne
- 130: Aktoren
- S100-S600: Verfahrensschritte

## Patentansprüche

1. Kraftfahrzeug (10), aufweisend:
ein UWB-System (20) mit mindestens einem UWB-Sendeempfänger (21, 23, 25, 27), der zum Senden und Empfangen von UWB-Pulsen über mindestens eine Antenne (22, 24, 26, 28) eingerichtet ist, und
eine Steuereinrichtung (30), die dazu eingerichtet ist: das UWB-System (20) zum Durchführen eines Positionierungsverfahrens zum Bestimmen einer Position eines Ladearms (41) einer Ladestation (40) anzusteuern, und
Mittel (11) des Kraftfahrzeugs (10) zur drahtlosen Kommunikation oder das UWB-System (20) zur Übertragung von Positionierungsdaten, basierend auf dem Positionierungsverfahren, zur Führung des Ladearms (41) an eine in Bezug auf das Kraftfahrzeug (10) vorbestimmte Position mit der Ladestation (40) anzusteuern.

2. Kraftfahrzeug (10) nach Anspruch 1, wobei das Kraftfahrzeug (10) ein Zugangssystem (50) zum elektronisch gesteuerten Verriegeln und Entriegeln zumindest einer Kraftfahrzeugtür (61, 62, 63) des Kraftfahrzeugs (10) aufweist und die Steuereinrichtung (30) dazu eingerichtet ist:
das UWB-System (20) zum Durchführen eines auf Laufzeitmessungen basierenden Positionierungsverfahrens zum Bestimmen der Position eines zweiten UWB-Systems (70) anzusteuern, und
basierend auf einem Ergebnis des Positionierungsverfahrens, das Zugangssystem (50) zum Verriegeln oder Entriegeln der zumindest einen Kraftfahrzeugtür (61, 62, 63) anzusteuern.

3. Kraftfahrzeug (10) nach einem der Ansprüche 1 oder 2, wobei die Steuereinrichtung (30) dazu eingerichtet ist, das UWB-System (20) zum Durchführen eines auf Laufzeitmessungen basierenden Positionierungsverfahrens zum Bestimmen der Position des Ladearms (41) anzusteuern.

4. Kraftfahrzeug (10) nach einem der Ansprüche 1 oder 2, wobei die Steuereinrichtung (30) dazu eingerichtet ist, das UWB-System (20) zum Durchführen eines auf Channel Impulse Response-Messungen basierenden Positionierungsverfahrens zum Bestimmen der Position des Ladearms (41) anzusteuern.

5. Kraftfahrzeug (10) nach einem der vorangehenden Ansprüche, wobei die Positionierungsdaten Steuerbefehle für die Positionierung des Ladearms (41) umfassen.

6. Kraftfahrzeug (10) nach einem der vorangehenden Ansprüche, wobei die Steuereinrichtung (30) dazu eingerichtet ist, die Mittel (11) des Kraftfahrzeug (10) zur drahtlosen Kommunikation oder das UWB-System (20) für die Übertragung von Daten zur Autorisierung mit einem mobilen Endgerät (80) anzusteuern.

7. Kraftfahrzeug (10) nach einem der vorangehenden Ansprüche, wobei das Kraftfahrzeug (10) ein Bluetooth-System (90) mit mindestens einem Bluetooth-Sendeempfänger (91) umfasst, der zum Senden und Empfangen von Bluetooth-Signalen über mindestens eine Bluetooth-Antenne (92) eingerichtet ist, und die Steuereinrichtung (30) dazu eingerichtet ist, das Bluetooth-System (90) zum Durchführen eines Positionierungsverfahrens zum Bestimmen der Position des Ladearms (41) anzusteuern.

8. Verfahren eines Kraftfahrzeugs (10) an einer Ladestation (40), wobei das Kraftfahrzeug (10) eine Steuereinrichtung (30) und ein UWB-System (20) mit mindestens einem UWB-Sendeempfänger (21, 23, 25, 27) aufweist, der zum Senden und Empfangen von UWB-Pulsen über mindestens eine Antenne (22, 24, 26, 28) eingerichtet ist, die Ladestation (40) einen Ladearm (41) aufweist und das Verfahren folgende Schritte umfasst:
Ansteuern des UWB-Systems (20) zum Durchführen eines Positionierungsverfahrens zum Bestimmen einer Position des Ladearms (41), und
Übertragen von Positionierungsdaten, basierend auf dem Positionierungsverfahren, zwischen dem Kraftfahrzeug (10) und der Ladestation (40) zur Führung des Ladearms (41) an eine in Bezug auf das Kraftfahrzeug (10) vorbestimmte Position.

9. Verfahren nach Anspruch 8, wobei die Ladestation (40) ein Mittel (100) zur drahtlosen Kommunikation oder ein drittes UWB-System (110), welches mindestens einen Ladestation-UWB-Sendeempfänger (111) aufweist, der zum Senden und Empfangen von UWB-Pulsen über mindestens eine Ladestationsantenne (112) eingerichtet ist, umfasst und das Positionierungsverfahren auf Laufzeitmessungen basiert.

10. Verfahren nach Anspruch 8, wobei die Ladestation (40) ein drittes UWB-System (110) umfasst, welches mindestens einen Ladestation-UWB-Sendeempfänger (111) aufweist, der zum Senden und Empfangen von UWB-Pulsen über mindestens eine Ladestationsantenne (112) eingerichtet ist, und das Positionierungsverfahren auf Channel Impulse Response-Messungen basiert.

11. Verfahren nach einem der Ansprüche 8 bis 10, wobei die Positionierungsdaten Steuerbefehle für die Positionierung des Ladearms (41) umfassen.

12. Verfahren nach einem der Ansprüche 8 bis 11, wobei das Verfahren folgenden Schritt umfasst:
Übertragen von Daten zur Autorisierung zwischen dem Kraftfahrzeug (10) und einem mobilen Endgerät (80).

13. Verfahren nach einem der Ansprüche 8 bis 12, wobei das Kraftfahrzeug (10) ein Bluetooth-System (90) mit mindestens einem Bluetooth-Sendeempfänger (91) umfasst, der zum Senden und Empfangen von Bluetooth-Signalen über mindestens eine Bluetooth-Antenne (92) eingerichtet ist, und die Ladestation (40) ein zweites Bluetooth-System (120) mit mindestens einem Ladestation-Bluetooth-Sendeempfänger (121) umfasst, der zum Senden und Empfangen von Bluetooth-Signalen über mindestens eine Ladestation-Bluetooth-Antenne (122) eingerichtet ist, und das Verfahren folgenden Schritt umfasst:
Ansteuern des Bluetooth-Systems (90) zum Durchführen eines Positionierungsverfahrens zum Bestimmen der Position des Ladearms (41).

14. Verwendung eines UWB-Systems (20) eines Kraftfahrzeugs (10) zum Durchführen eines auf Laufzeitmessungen oder Channel Impulse Response-Messungen basierenden Positionierungsverfahrens zum Bestimmen einer Position eines Ladearms (41) einer Ladestation (40) zur Führung des Ladearms (41) an eine in Bezug auf das Kraftfahrzeug (10) vorbestimmte Position.

15. Verwendung nach Anspruch 14, wobei das UWB-System (20) zum Durchführen eines auf Laufzeitmessungen basierenden Positionierungsverfahrens zum Bestimmen der Position eines zweiten UWB-Systems (70) zum Verriegeln oder Entriegeln zumindest einer Kraftfahrzeugtür (61, 62, 63) verwendet wird.
